**Europäisches Patentamt**

**European Patent Office**

**Office européen des brevets**

(19)

(11) Numéro de publication : **0 318 354 B1**

(12)

# FASCICULE DE BREVET EUROPEEN

(45) Date de publication du fascicule du brevet :
**01.07.92 Bulletin 92/27**

(51) Int. Cl.⁵ : **H04L 5/14, B60R 16/02**

(21) Numéro de dépôt : **88402863.0**

(22) Date de dépôt : **15.11.88**

(54) **Dispositif de transmission d'informations pour véhicule automobile et procédé de mise en oeuvre d'un tel dispositif.**

(30) Priorité : **25.11.87 FR 8716367**

(43) Date de publication de la demande :
**31.05.89 Bulletin 89/22**

(45) Mention de la délivrance du brevet :
**01.07.92 Bulletin 92/27**

(84) Etats contractants désignés :
**DE ES FR GB IT SE**

(56) Documents cités :
**EP-A- 0 117 832**
**US-A- 4 507 793**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**
Titulaire : **REGIE NATIONALE DES USINES RENAULT**
**Boîte postale 103 8-10 avenue Emile Zola**
**F-92109 Boulogne-Billancourt (FR)**

(72) Inventeur : **Lecocq, Jean-Luc**
**9, rue Camille Desmoulins**
**FR-92310 Sèvres (FR)**

(74) Mandataire : **Bressand, Georges et al**
**c/o CABINET LAVOIX 2 Place d'Estienne d'Orves**
**F-75441 Paris Cédex 09 (FR)**

## Description

La présente invention concerne un dispositif de transmission d'informations entre au moins deux organes d'un véhicule automobile et une utilisation de ce dispositif.

De tels dispositifs sont connus par exemple du document EP-A-O 117 832.

Plus particulièrement, l'invention se rapporte aux dispositifs de transmission d'informations en différentiel, qui ont été développés lors de la définition des systèmes de transmission pour véhicule automobile, à cause d'un certain nombre de problèmes liés à ces applications, et notamment des parasites pouvant perturber ces transmissions.

L'utilisation de la transmission différentielle permet d'obtenir une bonne immunité à ces parasites, mais elle présente un certain nombre d'inconvénients au niveau de sa fiabilité.

En effet, celle-ci est liée à la fiabilité de la connectique (micro-coupure, oxydation des contacts , etc..), aux possibilités de mise à la carrosserie ou au plus de la batterie d'un des fils de transmission, ce qui a pour effet d'empêcher le fonctionnement correct de ce type de système de transmission.

Le but de l'invention est donc de résoudre ces problèmes en proposant un dispositif de transmission d'informations qui soit fiable, simple, d'un prix de revient peu élevé et qui permette d'assurer une transmission d'informations suffisante même lorsque l'une des lignes de transmission est perturbée.

A cet effet, l'invention a pour objet un dispositif de transmission d'informations en différentiel entre au moins deux organes d'un véhicule automobile, dont chacun comporte des moyens d'émission et des moyens de réception d'informations, reliés par deux lignes de transmission d'informations, caractérisé en ce qu'il comporte des moyens de traitement des signaux circulant dans les lignes de transmission d'informations de manière à permettre un fonctionnement du dispositif en mode dégradé à partir des signaux circulant sur l'une des lignes de transmission d'informations, les moyens de traitement comprenant des moyens d'établissement de la dérivée des signaux transitant sur les lignes de transmission d'informations et des moyens de mise en forme des signaux de sortie desdits moyens d'établissement de la dérivée, prévus dans les moyens de réception de chaque organe, et en ce que les moyens de réception comprennent des moyens générateurs d'une tension de polarisation reliés aux moyens d'établissement de la dérivée.

Selon un autre aspect, l'invention a également pour objet une utilisation d'un dispositif tel que décrit précédemment, dans laquelle l'un des organes est un organe maître et l'autre un organe esclave, l'organe maître émettant un mot de synchronisation avant chaque message, et l'organe esclave transmettant un message en réponse, caractérisé en ce que, avant de transmettre son message de réponse, l'organe esclave émet également un mot de synchronisation.

L'invention sera mieux comprise à l'aide de la description qui va suivre, donnée uniquement à titre d'exemple et faite en se référant aux dessins annexés, sur lesquels :
– la Fig.1 représente un schéma synoptique illustrant le fonctionnement d'un dispositif de transmission d'informations en différentiel;
– la Fig.2 représente un schéma synoptique de deux organes d'un véhicule automobile reliés par deux lignes de transmission d'informations entrant dans la constitution d'un dispositif selon l'invention;
– la Fig.3 représente un schéma de moyens de réception d'informations entrant dans la constitution d'un organe d'un dispositif selon l'invention;
– la Fig.4 représente un schéma synoptique de moyens d'émission d'informations entrant dans la constitution d'un dispositif selon l'invention;
– la Fig.5 représente un schéma plus détaillé des moyens d'émission représentés sur la Fig.4; et
– la Fig.6 illustre une utilisation d'un dispositif selon l'invention.

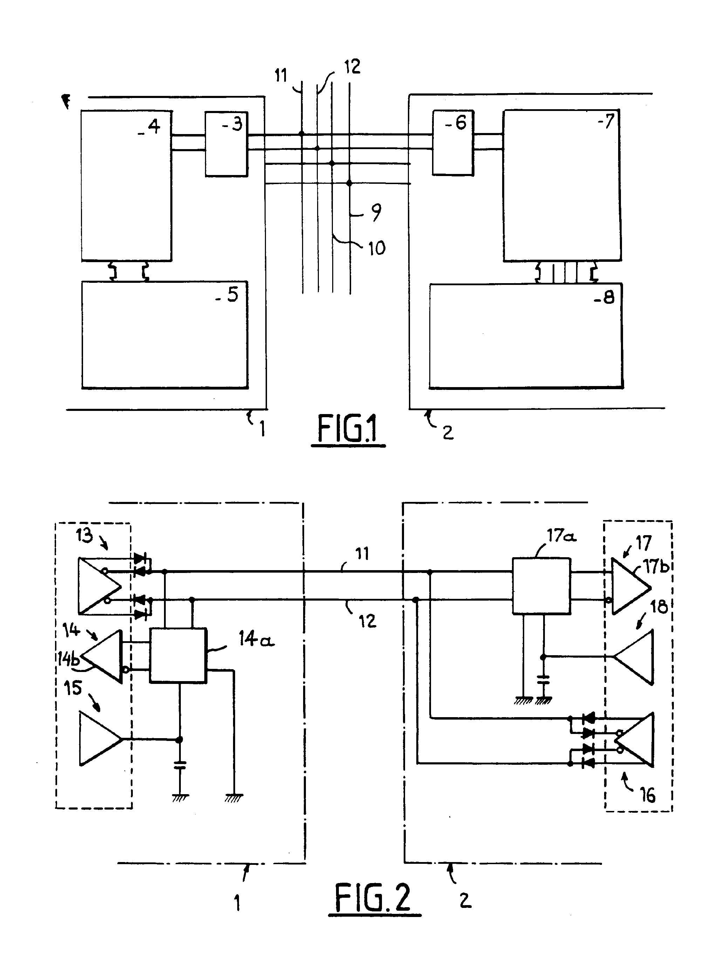

Ainsi qu'on peut le voir sur la Fig.1, un dispositif de transmission d'informations en différentiel, comporte au moins deux organes 1 et 2 disposés par exemple à des endroits différents d'un véhicule automobile, pour commander différents éléments du véhicule et dont l'un par exemple 1 est un organe maître et l'autre 2, un organe esclave. Bien entendu, le dispositif selon l'invention peut également être appliqué à un système multi-maître.

Chaque organe 1 ou 2 comporte des moyens par exemple 3, pour l'organe 1, d'émission et de réception d'informations reliés à des moyens 4 de gestion du protocole d'échange d'informations de l'organe, ces moyens 4 étant eux-mêmes reliés à des moyens d'interface 5 par exemple avec un microprocesseur, un convertisseur analogique-numérique ou des ports d'entrée-sortie.

L'organe 2 comporte des organes équivalents respectivement référencés par 6,7 et 8. Chaque organe reçoit par l'intermédiaire de lignes d'alimentation 9 et 10, une alimentation par exemple + 12V - 0V.

Par ailleurs, deux lignes de transmission d'informations 11 et 12 sont également reliées aux moyens d'émission et de réception d'informations 3 et 6 des organes 1 et 2 respectivement, ces lignes étant également reliées par exemple à d'autres organes disposés à d'autres endroits du véhicule automobile.

Cette architecture d'un dispositif de transmission d'informations est bien connue dans l'état de la technique et on ne la décrira pas plus en détail.

Si l'on se reporte maintenant à la Fig.2 où l'on reconnaît les organes 1 et 2 et les lignes 11 et 12, représentés sur la Fig.1, on peut constater que chaque organe par exemple 1 comporte, reliés aux lignes 11 et 12, des moyens 13 d'émission d'informations, des moyens 14 de réception d'informations ainsi que des moyens 15 de génération d'une tension de polarisation reliés aux moyens de réception d'informations 14. L'organe 2 comporte des moyens équivalents référencés respectivement par 16,17 et 18.

Les moyens de réception d'informations 14 et 17 comportent d'une part des moyens 14a et 17a d'établissement de la dérivée des signaux transitant dans les lignes de transmission 11 et 12 et d'autre part des moyens 14b et 17b, de mise en forme des signaux de sortie de ces moyens.

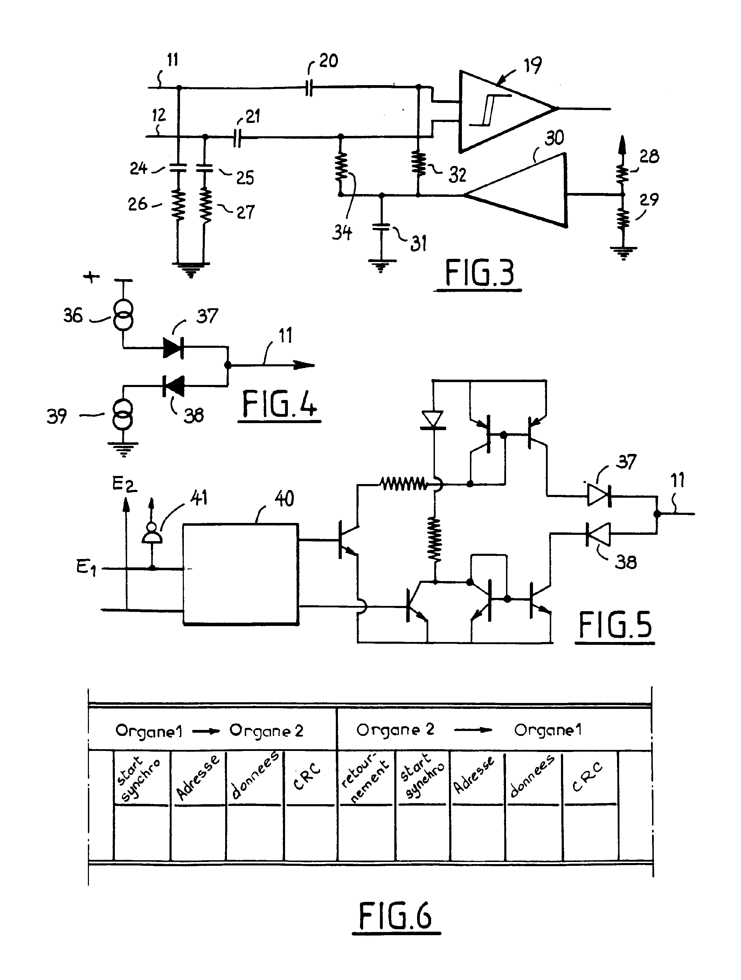

Si l'on se reporte maintenant à la Fig.3 qui représente plus en détail un mode de réalisation des moyens de réception 14 ou 17 décrits en regard de la Fig.2, on constate que les lignes 11 et 12 sont reliées aux entrées d'un comparateur 19 à travers des condensateurs 20 et 21. Le comparateur 19 est constitué par un comparateur à fiable offset et hystérésis centrée, par rapport à la tension de polarisation, réalisé par exemple à l'aide d'un comparateur LM 139 fabriqué par la Société National Semiconductors.

Les lignes 11 et 12 sont également reliées à la masse à travers des condensateurs 24,25 en série avec des résistances 26,27 respectivement. Les condensateurs 24 et 25 et les résistances 26 et 27 constituent des moyens de régularisation de la bande passante de chaque ligne.

Les moyens de polarisation comportent quant à eux un pont de résistances 28 et 29 relié à l'entrée d'un amplificateur 30 dont la sortie est reliée d'une part à la masse à travers un condensateur 31 et d'autre part à la ligne 11 à traverse une résistance 32 et à la ligne 12, à travers une résistance 34.

On conçoit donc que les condensateurs 20 et 21 ainsi que les résistances 32 et 34 connectés en pont aux bornes d'entrée du comparateur 19, constituent les moyens d'établissement de la dérivée des signaux transitant dans les lignes de transmission d'informations 11 et 12, tandis que le comparateur 19 constitue les moyens de mise en forme des signaux de sortie de ces moyens avant leur transmission vers le reste des moyens de traitement des organes. Ceci permet de faire travailler les organes sur les fronts des signaux et non plus sur les créneaux de ceux-ci et permet au dispositif de fonctionner même lorsque l'une des lignes 11 ou 12 est perturbée.

En effet, en mode de fonctionnement normal, c'est à dire lorsque les lignes 11 et 12 fonctionnent normalement, le comparateur 19 reçoit les dérivées des signaux transitant dans ces lignes et fonctionne normalement en différentiel. Par contre, lorsque l'une ou l'autre de ces lignes est perturbée c'est à dire par exemple mise à la masse ou au plus de la batterie, le comparateur reçoit la dérivée des signaux transitant dans l'autre ligne, ce qui lui suffit pour fonctionner, en raison de la polarisation.

Ainsi la transmission des informations peut se faire suivant un mode normal en différentiel par une transmission sur deux lignes ou en mode dégradé sur une seule ligne, en déterminant la dérivée des signaux dans cette ligne, et en remettant en forme les signaux de sortie des moyens d'établissement de la dérivée, les entrées du comparateur 19 étant polarisées par l'amplificateur 30.

Si l'on se reporte maintenant à la Fig.4, où l'on a représenté un schéma synoptique des moyens d'émission d'informations entrant dans le constitution d'un dispositif selon l'invention, on peut constater que ceux-ci comportent un premier générateur de courant 36 dont une borne est reliée à la borne positive d'une alimentation et dont la sortie est reliée à traverse deux diodes 37 et 38 connectées en série, à l'entrée d'un second générateur de courant 39 dont la sortie est reliée à la masse. La ligne de transmission, par exemple 11, est reliée au point milieu entre les deux diodes 37,38. Cette structure des moyens d'émission d'informations associée à une limitation du dI/dt permet d'empêcher toute suroscillation sur les signaux transmis par les moyens d'émission.

Les diodes 37 et 38 permettent quant à elles, en mode de réception de l'organe correspondant, d'empêcher les transistors des générateurs de courant 36,39 de se mettre en conduction lorsque les tensions des parasites dépassent les tensions d'alimentation du circuit. Ces moyens d'émission d'informations sont représentés plus en détail sur la Fig.5 où l'on retrouve les diodes 37 et 38 ainsi que la ligne de transmission d'informations 11. Les entrées de données en E1 sont dirigées vers des moyens de commande 40 de type connu dont les sorties sont reliées à des moyens générateurs de courant par exemple à transistors montés en miroirs de courant de type connu en soi.

Par ailleurs, les entrées E1 sont également dirigées en E2 vers un circuit équivalent pour la ligne d'alimentation 12, après inversion dans une porte 41, de manière a obtenir le signal complémentaire du signal transitant sur la ligne 11, sur la ligne 12. Ces moyens étant de type bien connu dans l'état de la technique, on ne les décrira pas plus en détail.

Des utilisations (Fig.6) de dispositifs de transmission d'informations en différentiel, dans lesquelles l'un des organes est un organe maître et l'autre un organe esclave, comportent un certain nombre d'étapes qui comprennent l'émission à partir de l'organe maître 1 d'un mot de synchronisation, puis un mot d'adresse, permettant d'activer l'organe esclave 2 correspondant, d'un mot de données pour l'organe adressé et enfin d'un mot de contrôle.

Après un moment correspondant au temps de retournement du dispositif, l'organe adressé émet vers l'organe maître, par exemple, un mot d'adresse, un mot de données et enfin un mot de contrôle, à titre de confirmation.

Dans le dispositif selon l'invention, avant de transmettre sa réponse, l'organe esclave émet également un mot de synchronisation permettant un bon recalage temporel du message lors de sa transmission vers d'autres organes.

## Revendications

1. Dispositif de transmission d'informations en différentiel entre au moins deux organes (1,2) d'un véhicule automobile, dont chacun comporte des moyens d'émission (13,16) et des moyens de réception (14,17) d'informations, reliés par deux lignes (11,12) de transmission d'informations, caractérisé en ce qu'il comporte des moyens de traitement (14,17a, 14b, 17b) des signaux circulant dans les lignes de transmission d'informations de manière à permettre un fonctionnement du dispositif en mode dégradé à partir des signaux circulant sur l'une des lignes (11,12) de transmission d'informations, les moyens de traitement comprenant des moyens (14a, 17a) d'établissement de la dérivée des signaux transitant sur les lignes (11,12) de transmission d'informations et des moyens (14b,17b) de mise en forme des signaux de sortie desdits moyens d'établissement de la dérivée, prévus dans les moyens de réception (14,17) de chaque organe (1,2), et en ce que les moyens de réception (14,17) comprennent des moyens (15,18) générateurs d'une tension de polarisation reliés aux moyens d'établissement de la dérivée.

2. Dispositif suivant la revendication 1, caractérisé en ce que lesdits moyens d'établissement de la dérivée comprennent un condensateur (20,21) et une résistance (32,34) montés en pont sur la borne d'entrée correspondante des moyens de mise en forme (14b, 17b).

3. Dispositif selon la revendiction 1 ou 2, caractérisé en ce que les moyens de mise en forme comprennent un comparateur à hystérésis (19).

4. Dispositif selon l'une quelconque des revendications précédentes, caractérisé en ce que les moyens d'émission (13,16) comprennent des générateurs de courant (36,39) actionnés par des moyens de commande (40) desdits organes (1,2).

5. Dispositif selon la revendication 4, caractérisé en ce que les moyens d'émission comprennent des premiers générateurs de courant (36) reliés à des seconds générateurs de courant (39) à travers deux diodes (37,38) connectées en série, les lignes de transmission d'informations (11,12) étant reliées aux points milieux entre les diodes (37,38).

6. Utilisation d'un dispositif selon l'une quelconque des revendications précédentes, dans laquelle l'un des organes est un organe maître et l'autre un organe esclave, l'organe maître (1) émettant un mot de synchronisation avant chaque message, et l'organe esclave (2) transmettant un message en réponse, caractérisé en ce que, avant de transmettre son message de réponse l'organe esclave (2) émet également un mot de synchronisation.

## Patentansprüche

1. Vorrichtung zur differentiellen Informationsübertragung zwischen mindestens zwei Organen (1, 2) eines Kraftfahrzeugs, von denen jedes Mittel zum Senden (13, 16) und Mittel zum Empfangen (14, 17) von Informationen aufweist, die miteinander über zwei Informationsübertragungsleitungen (11, 12) verbunden sind, **dadurch gekennzeichnet**, daß sie Signalbehandlungsmittel (14a, 17a, 14b, 17b) aufweist, zum Behandeln der auf den Informationsübertragungsleitungen laufenden Signale, um ein Funktionieren der Vorrichtung bei verschlechterter Übertragung der auf den Informationsübertragungsleitungen (11, 12) laufenden Signale zu erlauben, welche Signalbehandlungsmittel Mittel (14a, 17a) zum Bilden der Ableitung der auf den Informationsübertragungsleitungen (11, 12) übertragenen Signale, und Mittel (14b, 17b) aufweist, die dazu dienen, die Ausgangssignale des Mittels zum Bilden der Ableitung zu formen, die in den Empfangsmitteln (14, 17) jedes Organs (1, 2) vorgesehen sind, und daß die Empfangsmittel (14, 17) mit den Mitteln zum Bilden der Ableitung verbundene Mittel (15, 18) zum Erzeugen einer polarisierten Spannung aufweisen.

2. Vorrichtung nach Anspruch 1, **dadurch gekennzeichnet**, daß die Mittel zum Bilden der Ableitung einen Kondensator (20, 21) und einen Widerstand (32, 34) aufweisen, die als Brückenschaltung an den jeweiligen Eingangsanschluß des Mittels zur Signalformung (14b, 17b) angeschlossen sind.

3. Vorrichtung nach einem der Ansprüche 1 oder 2, **dadurch gekennzeichnet**, daß die Mittel zur Signalformung einen hysteresebehafteten Vergleicher (19) aufweisen.

4. Vorrichtung nach einem der vorstehenden Ansprüche, **dadurch gekennzeichnet**, daß die Sendemittel (13, 16) Stromquellen (36, 39) aufweisen, die von Steuermitteln (40) der Organe (1, 2) betätigt werden.

5. Vorrichtung nach Anspruch 4, **dadurch gekennzeichnet**, daß die Sendemittel erste Stromquellen (36) aufweisen, die mit zweiten Stromquellen (39) über zwei in Reihe geschaltete Dioden (37, 38) verbunden sind, wobei die Informationsübertragungsleitungen (11, 12) an Mittelpunkte zwischen den Dioden (37, 38) angeschlossen sind.

6. Verwendung einer Vorrichtung nach einem der vorstehenden Ansprüche, in der eines der Organe ein Hauptorgan und das andere ein abhängiges Organ ist, wobei das Hauptorgan (1) ein Synchronisierwort vor jeder Nachricht aussendet und das abhängige Organ (2) eine Antwortnachricht sendet, **dadurch gekennzeichnet**, daß das abhängige Organ (2) vor dem Senden seiner Antwortnachricht ebenfalls ein Synchronisierwort aussendet.

**Claims**

1. A device for the differential transmission of items of information between at least two elements (1, 2) of an automotive vehicle, each of which comprises information transmitting means (13, 16) and information receiving means (14, 17) connected via two information transmission lines (11, 12), characterized in that it comprises means (14a, 17a, 14b, 17b) for processing signals circulating in the information transmission lines, so as to enable the device to operate in a degraded mode with signals circulating on one of the information transmitting lines (11, 12), the processing means comprising means (14a, 17a) for establishing the derivative of the signals travelling on the information transmitting lines (11, 12) and means (14b, 17b) for shaping the output signals of said derivative-establishing means which are provided in the receiving means (14, 17) of each of the two elements (1, 2), and the receiving means (14, 17) comprising means (15, 18) for generating a bias voltage which are connected to the derivative-establishing means.

2. A device according to claim 1, characterized in that said derivative-establishing means comprise a capacitor (20, 21) and a resistor (32, 34) which are connected as a bridge to the corresponding input terminal of the shaping means (14b, 17b).

3. A device according to claims 1 or 2, characterized in that the shaping means comprise a hysteresis comparator (19).

4. A device according to any of the preceding claims, characterized in that the transmitting means (13, 16) comprise current generators (36, 39) actuated by means (40) for controlling said elements (1, 2).

5. A device according to claim 4, characterized in that the transmitting means comprise first current generators (36) connected to second current generators (39) via two diodes (37, 38) connected in series, the information transmitting lines (11, 12) being connected to the mid-points between the diodes (37, 38).

6. Use of a device according to any of the preceding claims, wherein one of the elements is a master element and the other element is a slave element, the master element (1) transmitting a synchronization word before each message, and the slave element (2) transmitting a message in response, characterized in that before transmitting its message in response, the slave element (2) also delivers a synchronization word.

FIG.1

FIG.2

FIG.3

FIG.4

FIG.5

| Organe 1 → Organe 2 | | | | Organe 2 → Organe 1 | | | | |
|---|---|---|---|---|---|---|---|---|
| start synchro | Adresse | donnees | CRC | retour- nement | start synchro | Adresse | donnees | CRC |
| | | | | | | | | |

FIG.6